# EUROPEAN PATENT APPLICATION

(11) **EP 4 357 401 A1**
(43) Date of publication of application: **24.04.2024**
(21) Application number: 23204604.5
(22) Date of filing: 19.10.2023
(51) Int. Cl.: C08K 3/22, C08K 3/36, C08K 5/19, C08K 5/3445, C08K 5/42, C08K 5/53, G03G 15/16

(54) **ELECTROPHOTOGRAPHIC MEMBER, ELECTROPHOTOGRAPHIC IMAGE FORMING APPARATUS, AND ELECTRICALLY CONDUCTIVE RESIN COMPOSITION**

(30) Priority: 21.10.2022 JP 2022169119
(71) Applicant: CANON KABUSHIKI KAISHA, Tokyo 146-8501 (JP)
(72) Inventor: TAKENAGA, Masahiro, Tokyo, 146-8501 (JP); HIRAYANAGI, Tomoe, Tokyo, 146-8501 (JP)
(74) Representative: TBK

(57) **Abstract**

An electrophotographic member, comprising a resin layer, the resin layer being electrically conductive, and the resin layer comprising: a thermoplastic polyester; a cation; an anion that does not contain a fluorine atom in a molecule of the anion; and a particle containing a metal oxide and having hydrophilization rate of 0.50 or more.

## Description

### BACKGROUND

### Technical Field

The present disclosure relates to an electrophotographic member, an electrophotographic image forming apparatus, and an electrically conductive resin composition.

### Description of the Related Art

Japanese Patent Application Publication No 2019-012124 discloses an electrophotographic member including a resin layer in which electrical conductivity is imparted by using a cation and an anion that has a specific fluorine atom-containing structure as an electrically conductive electrophotographic member such as an intermediate transfer belt in an electrophotographic image forming apparatus (also referred to as an "electrophotographic apparatus" hereinafter).

In recent years, however, regulations have been tightened for PFAS (perfluoroalkyl and polyfluoroalkyl substances), which exhibit high environmental persistence and bioaccumulation potential. Under such social situation, the inventors have investigated the use of a non-fluorinated ionic conducting agent that does not contain a fluorine atom as an ionic conducting agent used for imparting electrical conductivity to resin layers in electrophotographic members.

Working Example 1 in Japanese Patent Application Publication No 2021-176007 discloses an electrophotographic member that contains a thermoplastic polyester matrix and an ionic conducting agent that includes a cation and an anion that does not have a fluorine atom (also referred to as a "non-fluorinated ionic conducting agent" hereinafter).

### SUMMARY

At least one aspect of the present disclosure is directed to providing an electrophotographic member including a resin layer which contains a thermoplastic polyester as a matrix resin and a non-fluorinated ionic conducting agent, and in which environmental dependency of electrical conductivity is reduced. In addition, at least one aspect of the present disclosure is directed to providing an electrophotographic image forming apparatus in which high quality electrophotographic images can be stably formed in a wide variety of environments. In addition, at least one aspect of the present disclosure is directed to providing an electrically conductive resin composition which contains a thermoplastic polyester as a matrix resin and a non-fluorinated ionic conducting agent, and in which environmental dependency of electrical conductivity is reduced.

According to at least one aspect of the present disclosure, there is provided an electrophotographic member as specified in claims 1 to 12.

In addition, according to another aspect of the present disclosure, there is provided an electrophotographic image forming apparatus as specified in claim 13.

In addition, according to another aspect of the present disclosure, there is provided an electrically conductive resin composition as specified in claims 14 to 16.

Further features of the present disclosure will become apparent from the following description of exemplary embodiments with reference to the attached drawings.

### BRIEF DESCRIPTION OF THE DRAWINGS

FIG. 1 is a cross-sectional schematic view that illustrates one example of an electrophotographic image forming apparatus.
FIG. 2A is a diagram that explains a migration path of a cation in a resin layer according to one embodiment of the present disclosure.
FIG. 2B is a diagram that explains a migration path of a cation in a resin layer according to one embodiment of the present disclosure.
FIG. 3A is a diagram that explains the configuration of an electrophotographic belt according to one embodiment of the present disclosure.
FIG. 3B is a diagram that explains the configuration of an electrophotographic belt according to one embodiment of the present disclosure.
FIG. 3C is a diagram that explains the configuration of an electrophotographic belt according to one embodiment of the present disclosure.
FIG. 3D is a diagram that explains the configuration of an electrophotographic belt according to one embodiment of the present disclosure.

### DESCRIPTION OF THE EMBODIMENTS

Unless otherwise specified, descriptions of numerical ranges such as "from XX to YY" or "XX to YY" in the present disclosure include the numbers at the upper and lower limits of the range. When numerical ranges are described in stages, the upper and lower limits of each of each numerical range may be combined arbitrarily. In the present disclosure, wording such as "at least one selected from the group consisting of XX, YY and ZZ" means any of: XX; YY; ZZ; a combination of XX and YY; a combination of XX and ZZ; a combination of YY and ZZ; or a combination of XX and YY and ZZ. In addition, the units "Ω/□" for surface resistivity mean "Q/square".

The inventors have investigated an electrophotographic belt set forth in Working Example 1 in Japanese Patent Application Publication No 2021-176007, surface resistance (surface resistivity, hereinafter referred to as "ps") varied greatly according to the temperature and humidity of a usage environment. Use of a hydrophobic resin as a matrix resin for containing an ionic conducting agent has been considered as one method for suppressing changes in electrical conductivity caused by changes in humidity in a usage environment. Japanese Patent Application Publication No 2001-337515 discloses an electrophotographic member obtained using a hydrophobic ABS (acrylonitrile-butadiene-styrene) resin as a matrix resin.

However, according to investigations by the inventors, in cases where a hydrophobic resin was used as a matrix resin for incorporating a non-fluorinated ionic conducting agent, the surface resistivity (hereinafter referred to as "ps" in some cases) of an obtained resin composition was extremely high.

The reason why the ρs (surface resistivity) of a resin composition obtained by adding a non-fluorinated ionic conducting agent to a hydrophobic resin such as an ABS resin is surmised to be as follows.

That is, electrical conductivity exhibited by an ionic conducting agent is due to dissociation of an anion and a cation via water. Therefore, it can be said that a hydrophobic resin is disadvantageous in terms of imparting electrical conductivity by an ionic conducting agent. In addition, a non-fluorinated ionic conducting agent obtained using an anion that does not contain a fluorine atom has a particularly lower degree of dissociation than a fluorine-based ionic conducting agent obtained using an anion having a fluorine atom.

When an ionic conducting agent is added to a matrix resin, electrical conductivity is generally proportional to the product of the number of carrier ions that are bearers of electrical conductivity and the ease of movement of the ions (ion mobility). Moreover, electrical resistance is inversely proportional to the product of the number of ions and the ion mobility. In anions containing fluorine in a structure, negative charges are delocalized by the high electronegativity of fluorine. As a result, interactions with cations are weakened and the ionic conducting agent tends to dissociate into a cation and an anion. Therefore, the number of carrier ions increases. In a non-fluorinated ionic conducting agent, however, negative charges tend to be localized in anions that do not contain fluorine, and interactions with cations are strong. Therefore, cations and anions are unlikely to dissociate. As a result, the number of carrier ions is unlikely to increase.

Furthermore, in cases where the matrix resin is a resin containing oxygen in the molecule, cation-anion interactions in the ionic conducting agent can be weakened by a lone electron pair in oxygen coordinating to the cation. However, ABS resins do not exhibit such an effect.

For the reasons given above, the inventors concluded that when a non-fluorinated ionic conducting agent is used, it is inevitable to employ a thermoplastic polyester as the matrix resin of the non-fluorinated ionic conducting agent. Therefore, in cases where a non-fluorinated ionic conducting agent is used in the electrically conductive agent on the assumption that a thermoplastic polyester is used as the matrix resin, the inventios have recognized that the environmental dependence of electrical conductivity of the obtained resin composition must be reduced. Based on the above recognition, the inventors have conducted a further investigations, and as a result of that, it has been found that a resin layer or electrically conductive resin composition having the features shown below (also referred to as "a resin layer or the like" hereinafter) can favorably achieve the objectives mentioned above.

That is, a resin layer according to one aspect of the present disclosure exhibits electrical conductivity. In addition, the resin layer contains: a thermoplastic polyester resin; a cation, an anion that is free from a fluorine atom in the molecule; and a particle that contains a metal oxide and has hydrophilization rate of 0.50 or more. In addition, an electrically conductive resin composition according to one aspect of the present disclosure contains: a thermoplastic polyester; a cation, an anion that is free from a fluorine atom in the molecule; and a particle that contains a metal oxide and has hydrophilization rate of 0.50 or more.

The reason why the resin layer or the like has low environmental dependence of surface resistivity is not clear, but the inventors have surmised that it is due to the following reason.

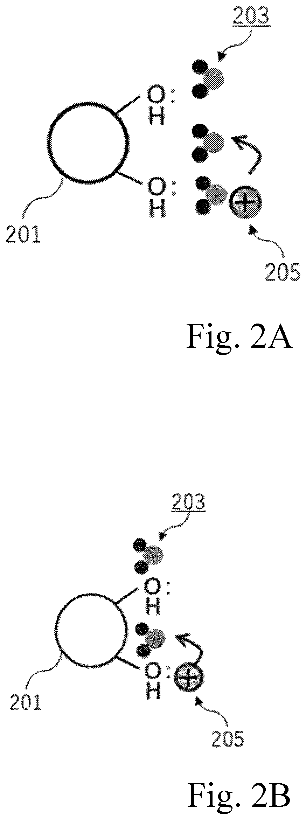

The resin layer or the like contains a thermoplastic polyester. Polyester resins are hydrophilic, and are therefore more likely to take in water molecules present in air into the resin than hydrophobic resins such as ABS resins. In a high temperature and high humidity environment, the resin layer or the like contains a large amount of water, and as shown in FIG. 2A, a lone electron pair in oxygen in a water molecule 203 interacts with a cation 205, and the water molecule forms a part of a migration path of the cation. As a result, the resin layer or the like exhibits high electrical conductivity.

Meanwhile, in a low temperature low humidity environment, the resin layer or the like does not contain enough amount of water, and an electrically conductive path via water molecules is hard to be formed. However, because the resin layer or the like contains a hydrophilic metal oxide particle 201, as shown in FIG. 2B, a water molecule 203 forms a migration path of a cation 205 together with a hydroxyl group (-OH) contained in the hydrophilic metal oxide particle, and it is thought that high electrical conductivity can be maintained even in a low temperature low humidity environment.

Moreover, in a high temperature and high humidity environment, because the thermoplastic polyester in the resin layer or the like contains a large amount of water, as shown in FIG. 2A, it is thought that a migration path of the cation 205 is formed by water molecules, electrical conductivity becomes essentially saturated, and the hydrophilic metal oxide particle contributes little to the formation of the migration path of the cation. Therefore, in a high temperature and high humidity environment, almost no further improvement in electrical conductivity of the resin layer or the like is brought about because of a hydrophilic metal oxide particle being contained. As a result, although the resin layer or the like contains a thermoplastic polyester as the matrix resin, it is possible to suppress changes in electrical conductivity (surface resistivity).

Embodiments of the electrophotographic member of the present disclosure will now be explained in detail. Moreover, the present disclosure is in no way limited to the embodiments given below.

### Electrophotographic Member

An electrophotographic member according to one embodiment of the present disclosure has a resin layer that contains: a thermoplastic polyester; a cation, an anion that does not have a fluorine atom in a molecule of the anion; and a particle that contains a metal oxide and has hydrophilization rate of 0.50 or more. The resin layer or the like may contain additives and so on other than these components as long as the advantageous effect of the present disclosure is not impaired.

The form of the electrophotographic member is not particularly limited. That is, an electrophotographic member according to one embodiment of the present disclosure can be an endless belt shape or roller shape. Hereinafter, the electrophotographic member having an endless belt shape may be referred to as an electrophotographic belt and the electrophotographic member having a roller shape may be referred to as the electrophotographic roller.

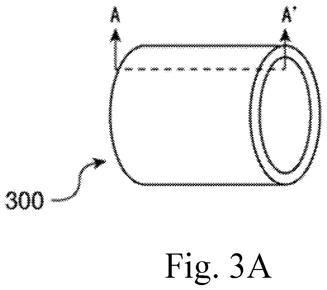

FIG. 3A shows a perspective view of an electrophotographic member 300 having an endless form (also referred to as an "electrophotographic belt" hereinafter) according to one embodiment of the present disclosure.

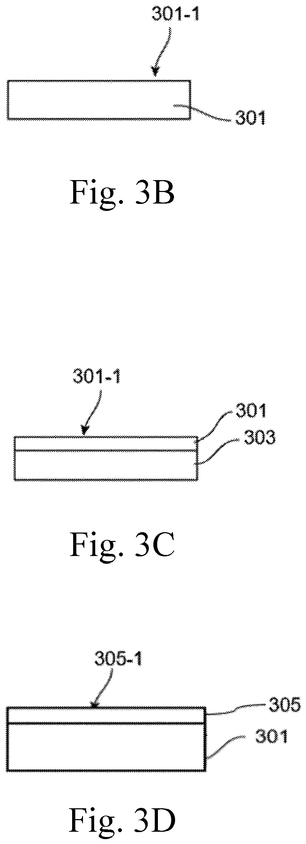

Examples of a layer configuration include a single layer structure in which a cross section along the line A-A' in FIG. 3A is formed from only a resin layer 301, as shown in FIG. 3B. In this case, the outer surface 301-1 of the resin layer is, for example, a surface for supporting unfixed toner in a case where the electrophotographic belt is used as an intermediate transfer belt, that is, forms the outer surface of the electrophotographic belt.

At least another example includes a configuration having a layer structure in which the cross section along the line A-A' has a base layer 303 and a resin layer 301 that covers the outer peripheral surface of the base layer, as shown in FIG. 3C. In this configuration, the surface of the resin layer 301 on the opposite side from the base layer 303 forms the outer surface of the electrophotographic belt.

Another example is a configuration having a layer structure in which the cross section along the line A-A' has a resin layer 301 and a surface layer 305 that covers the outer peripheral surface of the resin layer, as shown in FIG. 3D. In this configuration, the outer surface 305-1 of the surface layer 305 on the opposite side from the resin layer 301 forms the outer surface of the electrophotographic belt. Another example is a configuration (not shown) having a backside layer that covers the inner peripheral surface of an electrophotographic belt having a configuration shown in FIG. 3B, 3C or 3D.

### Surface Layer

Examples of a surface layer include a layer which contains a cured product of an active energy ray-curable resin and exhibits excellent abrasion resistance. This type of second layer can be provided by coating a composition containing an active energy ray-curable resin, such as a photocurable resin, on the outer peripheral surface of a base layer and then curing the composition. The thickness of the surface layer is not particularly limited, but is, for example, preferably 1 to 5 µm.

### Backside layer

Examples of the backside layer include a resin layer for reinforcing the base layer and an electrically conductive layer for imparting electrical conductivity to the inner peripheral surface of the electrophotographic belt. The thickness of the backside layer is not particularly limited, but is, for example, preferably 0.05 to 10 µm.

Moreover, an explanation will now be given using an electrophotographic belt as an example. Applications of the electrophotographic belt in an electrophotographic image forming apparatus are not particularly limited, but an intermediate transfer belt for holding an unfixed toner image on the outer surface can be preferably used in, for example, a transfer conveyor belt for holding a recording medium on the outer surface. An electrophotographic member according to one embodiment of the present disclosure can be preferably used in an intermediate transfer belt.

In addition, in a case where the electrophotographic member is used as an intermediate transfer belt, the surface resistivity ps, as measured at the outer surface of the electrophotographic member at a temperature of 23°C and a relative humidity of 50%, is preferably 1.0×10⁶ to 1.0×10¹⁴ Ω/□, and more preferably 1.0×10⁸ to 1.0×10¹² Ω/□.

When the surface resistivity is 1.0×10⁶ Ω/□ or more, a transfer electric field can be more easily attained at the time of secondary transfer, and the occurrence of dots and roughness in an electrophotographic image can be easily prevented. By making the surface resistivity 1.0×10¹⁴ Ω/□ or less, it is not necessary to excessively increase the transfer voltage at the time of secondary transfer and it is possible to better suppress an increase in the size of a power source and an increase in costs.

Moreover, depending on conditions at the time of secondary transfer, transfer may be possible even if the surface resistivity falls outside the range mentioned above, and the surface resistivity of the electrophotographic member is not therefore necessarily limited to the range mentioned above.

The thickness of the resin layer is not particularly limited, but when the electrophotographic member is used as an intermediate transfer belt, this thickness is, for example, preferably from 10 µm to 700 µm, and more preferably from 50 µm to 120 µm. By making the thickness of the resin layer fall within the range mentioned above, it is possible to ensure strength, flexing resistance, and so on, required of a member.

The resin layer may be a layer that forms a surface of the electrophotographic member (a surface layer). A treatment agent may be coated on a surface of the resin layer, a surface treatment such as a polishing treatment may be carried out, and a surface layer for protecting a surface of the resin layer may be separately provided.

Materials used in the resin layer or the like will now be explained in detail.

### Thermoplastic Polyester

The resin layer or the like contains a thermoplastic polyester. The thermoplastic polyester is preferably a matrix resin.

The thermoplastic polyester can be produced by means of polycondensation using a dicarboxylic acid component and a diol component, and additionally an oxycarboxylic acid component, a lactone component or a plurality of these components. The thermoplastic polyester resin is preferably a condensation polymerization product of monomers including a dicarboxylic acid component and a diol component.

From perspectives such as heat resistance, the polyester is preferably at least one selected from the group consisting of a poly(alkylene naphthalate), a poly(alkylene terephthalate), and a modified poly(alkylene naphthalate) and modified poly(alkylene terephthalate) obtained by modifying some blocks in these with other blocks (for example, isophthalic acid).

Of these, at least one polyester resin selected from the group consisting of poly(ethylene naphthalate), poly(ethylene terephthalate), modified poly(ethylene naphthalate) and modified poly(ethylene terephthalate) can be more preferably used. Furthermore, at least one polyester resin selected from the group consisting of poly(ethylene naphthalate), poly(ethylene terephthalate) and isophthalic acid-modified poly(ethylene terephthalate) can be further more preferably used.

It is possible to use one type of thermoplastic polyester in isolation or a combination of two or more types thereof, and a combination can be a blend or an alloy. In addition, other resins may be added as long as the advantageous effect of the present disclosure is not impaired. Well-known resins can be used as these other resins. For example, a polyether ester amide.

Moreover, a specific example of poly(ethylene naphthalate) is commercially available TN-8065S (trade name; produced by Teijin Ltd.). In addition, a specific example of poly(ethylene terephthalate) is commercially available TR-8550FF (trade name; produced by Teijin Ltd.). In addition, a specific example of a modified poly(ethylene terephthalate) is commercially available IP121B (trade name; produced by Bell Polyester Products, Inc.; condensation polymer of terephthalic acid, isophthalic acid and ethylene glycol).

From the perspective of maintaining the strength of the electrophotographic member, the content of the thermoplastic polyester in the resin layer or the like is preferably 50.0 to 99.0 mass%, more preferably 60.0 to 98.0 mass%, further preferably 70.0 to 98.0 mass%, and yet more preferably 75.0 to 98.0 mass%, relative to the mass of the resin layer or the like.

Anion Not Having a Fluorine Atom in The Molecule

The anion is not particularly limited as long as this does not contain a fluorine atom in the molecule. Specific examples of anions are shown in formulae (1) to (3) below.

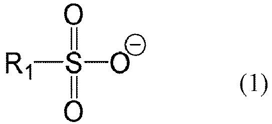

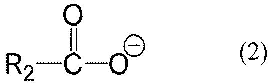

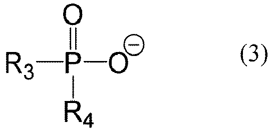

In formulae (1) to (3), R₁ to R₄ each independently denote a hydrogen atom, a hydrocarbon group having 1 to 18 carbon atoms or an alkoxy group having 1 to 18 carbon atoms.

Examples of hydrocarbon groups include straight chain or branched chain saturated hydrocarbon groups, straight chain or branched chain unsaturated hydrocarbon groups, substituted or unsubstituted saturated alicyclic hydrocarbon groups, substituted or unsubstituted unsaturated alicyclic hydrocarbon groups, and substituted or unsubstituted aromatic hydrocarbon groups.

Preferred examples of R₁ include a hydrogen atom, a straight chain or branched chain alkyl group having 1 to 6 carbon atoms (and more preferably 1 to 3 carbon atoms), and a substituted or unsubstituted aryl group, and more specifically an unsubstituted phenyl group or a phenyl group substituted with an alkyl group having 1 to 3 carbon atoms (and more preferably 1 or 2 carbon atoms).

Preferred examples of R₂ include an alkyl group having 3 to 15 carbon atoms (and more preferably 6 to 12 carbon atoms).

Preferred examples of R₃ and R₄ each independently include straight chain or branched chain alkyl groups having 3 to 15 carbon atoms (and more preferably 6 to 12 carbon atoms).

Examples of anions represented by formula (1) above include at least one selected from the group consisting of the anions listed below.

Sulfonate ion, methane sulfonate ion, ethane sulfonate ion, 1-butane sulfonate ion, p-toluene sulfonate ion (tosylate ion), 1-octane sulfonate ion, 1-decane sulfonate ion, 1-tetradecane sulfonate ion, 1-octadecane sulfonate ion, hydrogen sulfate ion, methyl sulfate ion, ethyl sulfate ion, 1-butyl sulfate ion, 1-octyl sulfate ion, 1-decyl sulfate ion, 1-tetradecyl sulfate ion and 1-octadecyl sulfate ion. At least one selected from the group consisting of methanoate ion, ethanoate ion, p-toluene sulfonate ion and hydrogen sulfate ion is more preferred.

Examples of anions represented by formula (2) above include at least one selected from the group consisting of the anions listed below.

Methanoate ion, ethanoate ion, butanoate ion, hexanoate ion, benzoate ion, octanoate ion, decanoate ion, dodecanoate ion, tetradecanoate ion, hexadecanoate ion, octadecanoate ion, methyl carbonate ion, ethyl carbonate ion, butyl carbonate ion, hexyl carbonate ion, octyl carbonate ion, decyl carbonate ion, tetradecyl carbonate ion and octadecyl carbonate ion. Decanoate ion is more preferred.

Examples of anions represented by formula (3) above include at least one selected from the group consisting of the anions listed below.

Phosphinate ion, dimethyl phosphinate ion, ethylmethyl phosphinate ion, diethyl phosphinate ion, dibutyl phosphinate ion, bis(2,4,4-trimethylpentyl) phosphinate ion, dioctyl phosphinate ion, ditetradecyl phosphinate ion, dioctyldecyl phosphinate ion, dimethyl phosphate ion, diethyl phosphate ion and dibutyl phosphate ion. At least one selected from the group consisting of diethyl phosphinate ion and bis(2,4,4-trimethylpentyl) phosphinate ion is more preferred, and bis(2,4,4-trimethylpentyl) phosphinate ion is further preferred.

Examples of ions other than those represented by formulae (1) to (3) include at least one selected from the group consisting of Cl⁻, Br⁻, I⁻, AlCl₄⁻ and N(CN)₂⁻. Br⁻ is preferred. It is preferable for the anion molecule to have a plurality of oxygen atoms or nitrogen atoms, which exhibit high electronegativity, because negative charges are delocalized and the anion more readily dissociates from a cation. In particular, formulae (1) to (3), which have a plurality of oxygen atoms in the molecule, are more preferred.

### Cation

The cation is not particularly limited. The cation preferably contains no fluorine atom in the molecule. Specific examples of the cation include alkali metal ions and structures represented by formulae (4) to (6) below.

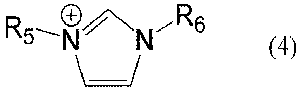

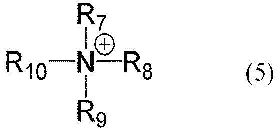

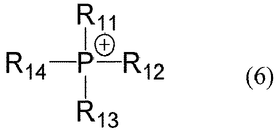

R₅ to R₁₄ each independently denote a hydrogen atom or a hydrocarbon group having 1 to 14 carbon atoms.

Examples of hydrocarbon groups include straight chain or branched chain saturated hydrocarbon groups, straight chain or branched chain unsaturated hydrocarbon groups, substituted or unsubstituted saturated alicyclic hydrocarbon groups, substituted or unsubstituted unsaturated alicyclic hydrocarbon groups, and substituted or unsubstituted aromatic hydrocarbon groups.

Preferred examples of R₅ and R₆ each independently include straight chain or branched chain alkyl groups having 1 to 6 carbon atoms.

Preferred examples of R₇ to R₁₀ each independently include straight chain or branched chain alkyl groups having 1 to 10 carbon atoms.

Preferred examples of R₁₁ to R₁₄ each independently include straight chain or branched chain alkyl groups having 1 to 14 carbon atoms.

Examples of cations represented by formula (4) above include at least one selected from the group consisting of the cations listed below.

1-ethyl-3-methylimidazolium cation, 1-butyl-3-methylimidazolium cation, 1-hexyl-3-methylimidazolium cation, 1-octyl-3-methylimidazolium cation, 1-octyl-3-methylimidazolium cation, 1-decyl-3-methylimidazolium cation and 1-tetradecyl-3-methylimidazolium cation. At least one selected from the group consisting of 1-ethyl-3-methylimidazolium cation and 1-butyl-3-methylimidazolium cation is more preferred.

Examples of cations represented by formula (5) above include at least one selected from the group consisting of the cations listed below.

Ammonium ion, trimethylpropylammonium ion, tributylmethylammonium ion, tetraethylammonium ion, tributylethylammonium ion, methyltrioctylammonium ion, methyltridodecylammonium ion and trihexyltetradecylammonium ion. At least one selected from the group consisting of tributylmethylammonium ion and tributylethylammonium ion is more preferred.

Examples of cations represented by formula (6) above include at least one selected from the group consisting of the cations listed below.

Phosphonium ion, trimethylpropylphosphonium ion, tributylmethylphosphonium ion, tetraethylphosphonium ion, tributylethylphosphonium ion, methyltrioctylphosphonium ion, methyltridodecylphosphonium ion and trihexyltetradecylphosphonium ion. Trihexyltetradecylphosphonium ion is more preferred.

Hydrocarbon groups of R₅ to R₁₄ may be straight chain or branched chain. In addition, these hydrocarbon groups may include a cyclic structure or an unsaturated bond. However, straight chain hydrocarbon groups having relatively low steric hindrance are preferred from the perspective of ease of interaction with a metal oxide particle and water molecules.

It is possible to use one of the anions and cations mentioned above in isolation or combinations of two or more types thereof. The ionic conducting agent is constituted from a combination of one or more of each of these anions and cations. For example, the resin layer or the like contains an ionic conducting agent including anions and cations mentioned above. In addition, it is preferable for the anions and cations mentioned above to be derived from the ionic conducting agent.

Preferred examples of combinations of anions and cations include
a combination of an anion represented by formula (1) and a cation represented by formula (4),
a combination of an anion represented by formula (1) and a cation represented by formula (5),
a combination of an anion represented by formula (2) and a cation represented by formula (6),
a combination of an anion represented by formula (3) and a cation represented by formula (5), and
a combination of an anion represented by formula (3) and a cation represented by formula (6).

In addition, the content of the ionic conducting agent (the total content of anions and cations) in the resin layer or the like is preferably 0.1 mass% or more relative to the mass of the resin layer or the like. This is in order to more readily impart the resin layer or the like with a prescribed level of electrical conductivity. The upper limit for this content is not particularly limited but is, for example, 15.0 mass% or less. This is because if this content exceeds 15.0 mass%, the electrical conductivity improvement effect is limited even if the resin layer or the like contains the ionic conducting agent.

A preferred range for the content of the ionic conducting agent in the resin layer or the like is from 0.1 mass% to 15.0 mass%. This content should be selected, as appropriate, within this range according to the electrical conductivity to be exhibited by the electrophotographic member. For example, the content of the ionic conducting agent is more preferably 0.5 to 10.0 mass%, and further preferably 2.0 to 7.0 mass%.

Moreover, it can be assessed whether the ionic conducting agent is present in the resin layer or the like by extracting the ionic conducting agent from the resin layer or the like and carrying out identification. A solvent used for the extraction should be selected from among solvents able to dissolve the ionic conducting agent. A specific example thereof is methanol. In addition, it is possible to subject the extract liquid to centrifugal separation if necessary or isolate the ionic conducting agent by means of liquid chromatography or the like if necessary, and then identify anion and cation structures using mass spectrometry or NMR analysis. In addition, the total content of anions and cations in the resin layer or the like can be determined by removing the solvent from the extract liquid and then measuring the mass of dried product. Examples of methods for identifying cation and anion structures and measuring masses thereof will now be given.

200 mg of a sample is cut from a resin layer, immersed in 1 mL of methanol, and then irradiated with ultrasonic waves having a frequency of 40 kHz for 10 minutes. Centrifugal separation is then carried out for 10 minutes at 12,000 rpm using a highspeed centrifugal separator, and the supernatant liquid is collected to obtain a solution of cations and anions. Next, the obtained solution is subjected to mass spectrometry using a liquid chromatography-mass spectrometer.

### Mass Spectrometry Conditions

- Direct introduction method
- Injected amount: 2 µL
- Ionization method: electrospraying ionization (ESI)

Next, the methanol solvent is removed from the cation/anion extract liquid, and the extract is dissolved again in deuterated methanol. The obtained solution is measured using ¹H-NMR.

### Measurement Conditions

- Frequency: 400 MHz
- Number of accumulations: 32
- Measurement temperature: 25°C

Structures of cations and anions can be specified from the mass spectrometry and ¹H-NMR spectra. Furthermore, in cases where the solution does not contain methanol-soluble components other than the ionic conducting agent, it is possible to determine the total amount of anions and cations contained in the 200 mg sample by measuring the mass of dry product obtained by removing methanol from the solution.

### Particle Containing Metal Oxide

The resin layer or the like contains a particle containing a metal oxide. The particle containing a metal oxide may be a metal oxide particle. The surface hydrophilization rate of the particle containing a metal oxide is 0.50 or more. If this surface hydrophilization rate is 0.50 or more, the metal oxide can contribute to formation of electrically conductive paths in the resin layer or the like in a low temperature low humidity environment, as mentioned above. The surface hydrophilization rate of the particle containing a metal oxide is preferably high. That is, the surface hydrophilization rate of the particle containing a metal oxide is preferably 0.50 to 1.00, more preferably 0.50 to 0.99, and further preferably 0.51 to 0.98.

The surface hydrophilization rate of the particle containing a metal oxide is defined as follows. The hydrophilization rate is calculated from a spectrum of the surface of particle containing a metal oxide, which is measured using a near-infrared spectrophotometer, and is a value obtained by dividing the absorbance of a peak corresponding to a bond between a metal atom and a hydroxyl group in the metal oxide by the absorbance of a peak corresponding to a bond between a metal atom and an oxygen atom in the metal oxide.

That is, M-OH denotes a hydroxyl group bonded to a metal atom (M) that constitutes a particle containing a metal oxide, and M=O denotes an oxygen atom bonded by a double bond to a metal atom that constitutes a particle containing a metal oxide. Here, in an IR spectrum obtained by measuring the surface of a particle containing a metal oxide using a near-infrared spectrophotometer, the hydrophilization rate is a value obtained by dividing the absorbance at a wavelength that represents M-OH by the absorbance at a wavelength that represents M=O. Conditions and so on for the near-infrared spectrophotometer are described later.

Hydrophilization rate = (absorbance at wavelength that represents M-OH) / (absorbance at wavelength that represents M = O)

The metal in the metal oxide encompasses a metalloid. That is, the metal oxide means an oxide of a metal or an oxide of a metalloid. Examples of the particle containing a metal oxide are at least one particle selected from the group consisting of an alumina particle, a silica particle and a titanium oxide particle.

### Silica Particle

The degree to which silica particle surfaces are hydrophilized is evaluated by means of near-infrared spectroscopy. Specifically, a near-infrared spectrum of silica particle surfaces is measured using a near-infrared spectrophotometer. The hydrophilization rate of silica can be calculated by dividing the absorbance at a wavelength of 7300 cm⁻¹, which is attributed to Si-OH, by the absorbance at a wavelength of 4500 cm⁻¹, which is attributed to SiO₂.

A hydrophilic silica particle means a particle having a hydrophilization rate of 0.50 or more, as calculated using the method described above.

The silica particle is not particularly limited as long as this satisfies the hydrophilization rate mentioned above, and it is possible to use one type of silica particle in isolation, or a combination of two or more types thereof.

### Alumina Particle

The hydrophilization rate of the alumina particle is calculated using a method similar to the method described above for calculating the hydrophilization rate of the silica particle. In the case of an alumina particle, the hydrophilization rate can be calculated by dividing the absorbance at a wavelength of 3690 cm⁻¹, which is attributed to Al-OH, by the absorbance at a wavelength of 7425 cm⁻¹, which is attributed to Al₂O₃. The alumina particle should have a hydrophilization rate of 0.50 or more, as calculated using the method described above. The alumina particle is not particularly limited as long as this satisfies the hydrophilization rate mentioned above, and it is possible to use one type of alumina particle in isolation, or a combination of two or more types thereof.

### Titanium Oxide Particle

The hydrophilization rate of the titanium oxide particle can be calculated using a method similar to the method described above for calculating the hydrophilization rate of the silica particle. In the case of a titanium oxide particle, the hydrophilization rate can be calculated by dividing the absorbance at a wavelength of 7200 cm⁻¹, which is attributed to Ti-OH, by the absorbance at a wavelength of 4500 cm⁻¹, which is attributed to TiO₂. The amount of Ti-OH present at a surface can be evaluated from the hydrophilization rate calculated in this way.

The titanium oxide particle should have a hydrophilization rate of 0.50 or more, as calculated using the method described above. The titanium oxide particle is not particularly limited as long as this satisfies the hydrophilization rate mentioned above, and it is possible to use one type of titanium oxide particle in isolation, or a combination of two or more types thereof.

In addition, if the hydrophilization rate mentioned above is satisfied, it is possible to use two or more types of particles containing oxides of different types of metal (for example, a silica particle and an alumina particle).

In addition, the BET specific surface area of the particle containing a metal oxide is preferably 50 to 380 m²/g. If the BET specific surface area falls within this range, the particle containing a metal oxide can reliably contribute to formation of a migration path of a cation in the resin layer or the like in a low temperature low humidity environment. In addition, because the particle size of the particle containing a metal oxide is not excessively small, cation migration is unlikely to be impaired.

A particle containing a metal oxide and having a surface hydrophilization rate of 0.5 or more and a BET specific surface area of 50 to 380 m²/g should be selected, as appropriate, from among commercially available particles containing a metal oxide. Examples of commercially available particles containing a metal oxide and having a surface hydrophilization rate of 0.5 or more and a BET specific surface area of 50 to 380 m²/g are given in Table 1 below.

**[Table 1]**

| Material | Name | Hydrophilizati on rate | BET specific surface area (m²/g) |
|---|---|---|---|
| Silica | AEROSIL50 (product name, produced by Nippon Aerosil Co. Ltd.) | 0.50 | 50 |
| | AEROSIL90 (product name, produced by Nippon Aerosil Co. Ltd.) | 0.52 | 90 |
| | AEROSIL130 (product name, produced by Nippon Aerosil Co. Ltd.) | 0.52 | 130 |
| | AEROSIL200 (product name, produced by Nippon Aerosil Co. Ltd.) | 0.96 | 200 |
| | AEROSIL300 (product name, produced by Nippon Aerosil Co. Ltd.) | 0.96 | 300 |
| | AEROSIL380 (product name, produced by Nippon Aerosil Co. Ltd.) | 0.98 | 380 |
| Alumina | AEROXIDE Alu130 (product name, produced by Nippon Aerosil Co. Ltd.) | 0.67 | 130 |
| Titanium oxide | AEROXIDE TiO₂ P25 (product name, produced by Nippon Aerosil Co. Ltd.) | 0.99 | 50 |

In addition, the amount of the particle containing a metal oxide in the resin layer or the like is preferably 15 to 500 parts by mass, more preferably 20 to 400 parts by mass, and further preferably 20 to 200 parts by mass, relative to 100 parts by mass of the ionic conducting agent (the total content of anions and cations). If the amount of metal oxide having surface hydroxyl groups relative to anions and cations falls within the range mentioned above, a more efficient cation migration path can be formed.

The presence of the particle containing a metal oxide in the resin layer or the like can be confirmed by extracting solid components from the resin layer and carrying out analysis using near-infrared spectroscopy described later. More specifically, it is possible to identify a metal oxide in the resin layer by dissolving components other than the particle containing a metal oxide in a solvent able to dissolve the polyester (hexafluoroisopropanol or the like) or a solvent able to dissolve the ionic conducting agent (methanol or the like), filtering to obtain a solid, and then subjecting the solid to elemental analysis or near-infrared spectroscopy.

In a case where the solid contains substances other than the particle containing a metal oxide, the measurements described above should be carried out after separating the particle containing a metal oxide using an appropriate separation means. An example of an appropriate separation mean is centrifugal separation. In addition, the amount of the particle containing a metal oxide in the resin layer can be calculated on the basis of the mass of the particle containing a metal oxide separated using a means mentioned above.

### Additives

The electrophotographic member can contain other components (additives) in the resin layer as long as the advantageous effect of the present disclosure is not impaired.

Examples of additives include surfactants, antioxidants (for example, hindered phenol-based antioxidants, phosphorus-based antioxidants and sulfur-based antioxidants), ultraviolet radiation absorbers, organic pigments, inorganic pigments, pH-adjusting agents, crosslinking agents, compatibilizers, release agents, coupling agents, lubricants, electrically conductive fillers (for example, carbon black, carbon fibers, carbon nanotubes, electrically conductive tin oxide, and electrically conductive mica), and polymeric anti-static agents (for example, polyether amides and polyether ester amides). It is possible to use one of these additives in isolation or a combination of two or more types thereof. Usage quantities of additives can be specified, as appropriate, and are not particularly limited.

### Method for Producing Electrophotographic Member

The resin layer in the electrophotographic member can be formed using an electrically conductive resin composition containing the thermoplastic polyester and ionic conducting agent mentioned above and, if necessary, other additives (for example, a resin composition obtained by melt kneading these components).

For example, an electrophotographic member having this resin layer can be formed using the method described below. That is, the electrophotographic member can be obtained by pelletizing the resin composition and then forming, for example, a seamless belt using a well-known molding method such as continuous melt extrusion molding, injection molding, stretch blow molding or inflation molding. The electrophotographic member is preferably an electrophotographic belt having the form of an endless belt. In addition, the electrophotographic member can be subjected to a surface treatment, such as coating a treatment agent or a polishing treatment, as mentioned above.

### Electrophotographic Image Forming Apparatus

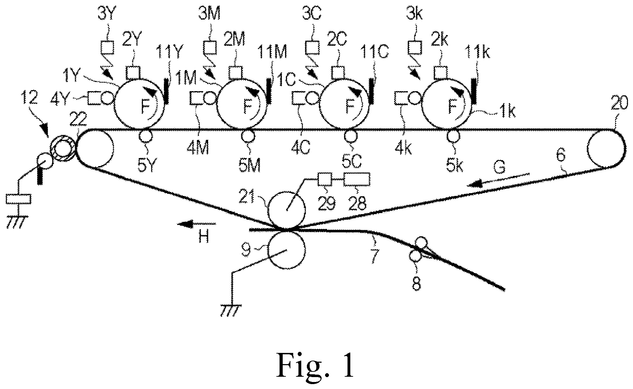

Using FIG. 1, an explanation will now be given of an electrophotographic image forming apparatus (an electrophotographic apparatus) provided with an intermediate transfer member (hereinafter referred to as an intermediate transfer belt) as an electrophotographic member, but the present disclosure is not limited to this embodiment.

The electrophotographic image forming apparatus is preferably one in which the electrophotographic member described above is provided as an intermediate transfer member. The intermediate transfer member is a member for secondary transfer to a recording material of a toner image transferred from a photosensitive drum. The intermediate transfer member is, for example, an electrically conductive belt. Moreover, FIG. 1 is a cross-sectional schematic view that illustrates one example of a full color electrophotographic apparatus that uses an electrophotographic process.

This electrophotographic apparatus has a so-called tandem configuration in which electrophotographic stations of multiple colors are disposed in a row in the direction of rotation of an electrophotographic member (an intermediate transfer belt). In the explanations given below, symbols relating to the colors yellow, magenta, cyan and black are given the suffixes Y, M, C and k respectively, but suffixes may be omitted for similar configurations.

In FIG. 1, charging devices 2Y, 2M, 2C and 2k, exposure devices 3Y, 3M, 3C and 3k, developing devices 4Y, 4M, 4C and 4k, and an intermediate transfer member (an intermediate transfer belt) 6 are disposed around photosensitive drums (photoreceptors, image bearing members) 1Y, 1M, 1C and 1k.

A photosensitive drum 1 is rotated and driven at a prescribed peripheral velocity (process speed) in a direction shown by an arrow F. A charging device 2 charges the peripheral surface of the photosensitive drum 1 to a prescribed polarity and potential (primary charging). As an exposure device 3, a laser beam scanner outputs an on/off modulated laser beam in response to image data inputted from an external device (not shown) such as an image scanner or a computer, and brings about scanning exposure of the charged surface on the photosensitive drum 1. As a result of this scanning exposure, an electrostatic latent image corresponding to the target image data is formed on the surface of the photosensitive drum 1.

The developing devices 4Y, 4M, 4C and 4k house toners of different colors, namely yellow (Y), magenta (M), cyan (C) and black (k). In addition, the developing device 4 to be used is selected on the basis of image data, a developer (toner) is developed on the photosensitive drum 1, and the electrostatic latent image becomes visible as a toner image. In the present embodiment, a reverse development method is used in which development is carried out by causing a toner to adhere to an exposed part of an electrostatic latent image. In addition, the electrophotographic means is constituted from this type of charging device, exposure device and developing device.

In addition, the intermediate transfer belt 6 is an electrophotographic belt having an endless form. The outer peripheral surface of the intermediate transfer belt 6 is disposed so as to be in contact with the surface of the photosensitive drum 1, and the belt is stretched by a plurality of stretching rollers 20, 21 and 22. In addition, the belt rotates in the direction of the arrow G. In the present embodiment, the stretching roller 20 is a tension roller for controlling the tension of the intermediate transfer belt 6 to a constant level, the stretching roller 22 is a roller for driving the intermediate transfer belt 6, and the stretching roller 21 is a counter roller for secondary transfer. In addition, primary transfer rollers 5Y, 5M, 5C and 5k are disposed at primary transfer positions that face the photosensitive drums 1 across the intermediate transfer belt 6.

Colored unfixed toner images formed on the photosensitive drums 1 are sequentially subjected to electrostatic primary transfer on the intermediate transfer belt 6 by applying, to a primary transfer roller 5, a primary transfer bias having a positive polarity that is the reverse polarity from the charging polarity of the toner by means of a constant voltage source or a constant current source. In addition, a full color image is obtained by overlaying the unfixed toner images of the four colors on the intermediate transfer belt 6. The intermediate transfer belt 6 rotates while holding the toner images transferred from the photosensitive drums 1. For every rotation of a photosensitive drum 1 following the primary transfer, untransferred toner on the surfaces of the photosensitive drums 1 are repeatedly cleaned by cleaning devices 11 (11Y, 11M, 11C and 11k), and the process then enters an image formation step.

In addition, a secondary transfer roller (transfer part) 9 is pressed against the toner image-holding surface of the intermediate transfer belt 6 at a secondary transfer position on the intermediate transfer belt 6 that faces the transfer pathway of a recording medium 7. In addition, a counter roller 21, which serves as a counter electrode of the secondary transfer roller 9 and to which a bias is applied, is disposed on the back surface side of the intermediate transfer belt 6 at the secondary transfer position.

When a toner image on the intermediate transfer belt 6 is transferred to the recording medium 7, a bias such as -1000 V to -3000 V, which has the same polarity as the toner, is applied to the counter roller 21 by means of a secondary transfer bias application means 28, and a current of -10 µA to -50 µA flows. At this point, the transfer voltage is detected by a transfer voltage detection means 29. Furthermore, a cleaning device (a belt cleaner) 12 for removing toner remaining on the intermediate transfer belt 6 after the secondary transfer is provided on the downstream side from the secondary transfer position.

The recording medium 7, which has been introduced to the secondary transfer position from a resist roller pair 8, is held and conveyed at the secondary transfer position, and at this point, a constant voltage bias (transfer bias) that is controlled to a prescribed value is applied from the secondary transfer bias application means 28 to the counter roller 21 opposite the secondary transfer roller 9. When the transfer bias having the same polarity as the toner is applied to the counter roller 21, the four-color full color image (toner images), which is obtained by overlapping at the transfer positions on the intermediate transfer belt 6, is transferred all at once to the recording medium 7, and a full color unfixed toner image is formed on the recording material. After receiving the transferred toner image, the recording medium 7 is conveyed from the secondary transfer position in the direction shown by the arrow H, introduced into a fixing unit (not shown), and thermally fixed.

According to at least one aspect of the present disclosure, it is possible to obtain an electrophotographic member including a resin layer which contains a thermoplastic polyester as a matrix resin and a non-fluorinated ionic conducting agent, and in which environmental dependency of electrical conductivity is reduced. In addition, according to at least one aspect of the present disclosure, it is possible to obtain an electrophotographic image forming apparatus in which high quality electrophotographic images can be stably formed in a wide variety of environments. In addition, according to at least one aspect of the present disclosure, it is possible to obtain an electrically conductive resin composition which contains a thermoplastic polyester as a matrix resin and a non-fluorinated ionic conducting agent, and in which environmental dependency of electrical conductivity is reduced.

### Examples

The following describes the disclosure in more detail using examples, but the disclosure is not limited by the examples.

Measurement methods and evaluation methods will now be explained through the use of examples. Moreover, in these examples, an electrophotographic belt having an endless form was produced as an electrophotographic member.

### Measurement of Surface Resistivity

The surface resistivity of an electrophotographic belt was measured in accordance with Japan Industrial Standards (hereinafter referred to as "JIS") K6911:2006.

A high resistance meter (product name: Hiresta UP MCP-HT450, produced by Mitsubishi Chemical Analytech Co., Ltd.; main electrode internal diameter: 50 mm, guard ring electrode internal diameter: 53.2 mm, probe external diameter: 57.2 mm (product name: UR-100, produced by Mitsubishi Chemical Analytech Co., Ltd.)) was used as a measurement apparatus. A voltage of 250 V was applied for 10 seconds to an electrophotographic belt being measured, and the surface resistivity was measured at four locations in the circumferential direction of the outer surface of this electrophotographic belt.

### Logρs

An electrophotographic belt was left for 12 hours in an environmental test room controlled to a temperature of 23°C and a relative humidity of 50%. Next, the surface resistivity was measured at four locations on the electrophotographic belt in an environment at a temperature of 23°C and a relative humidity of 50% using the measurement method described above, and the arithmetic mean value of this surface resistivity was taken to be ρs. The base 10 logarithm (common logarithm) of ρs was taken to be logps, and this was used as an indicator of electrical resistance.

### Environmental Fluctuation

An electrophotographic belt was left for 12 hours in an environmental test room controlled to a temperature of 15°C and a relative humidity of 10%. Next, the surface resistivity was measured at four locations on the electrophotographic belt in an environment at a temperature of 15°C and a relative humidity of 10% using the measurement method described above, and the base 10 logarithm of the arithmetic mean value of surface resistivity (ρs) was taken to be logps (15°C/10%).

Next, the electrophotographic belt that had been subjected to the measurements described above was left for 12 hours in an environmental test room controlled to a temperature of 30°C and a relative humidity of 80%. Next, the surface resistivity was measured at four locations on the electrophotographic belt in an environment at a temperature of 30°C and a relative humidity of 80% using the measurement method described above, and the base 10 logarithm of the arithmetic mean value of surface resistivity (ρs) was taken to be logps (30°C/80%).

The value of "environmental fluctuation" was defined as the difference between logps (15°C/10%) and logps (30°C/80%) (logps (30°C/80%)-logρs (15°C/10%)). A lower "environmental fluctuation" value indicates that environmental fluctuation can be reduced.

### Measurement of Hydrophilization Rate

A near-infrared spectrum of the surface of the particle containing a metal oxide was measured using a near-infrared spectrophotometer (product name: Frontier FT-IR/NIR, produced by PerkinElmer Co., Ltd.). From this spectral data, the hydrophilization rate was defined as a value obtained by dividing the absorbance of a peak attributable to absorption corresponding to metal M-OH by the absorbance of a peak attributable to absorption corresponding to metal M-O. Near-infrared spectroscopy measurements were carried out under the following conditions.
- Method: near-infrared reflection (using NIRA unit)
- Scanning speed: 0.2 cm/sec
- Resolution: 4 cm⁻¹
- Number of accumulations: 128

### Measurement of BET Specific Surface Area

BET specific surface area was calculated by causing nitrogen gas to adsorb to the surface of the particle containing a metal oxide in accordance with JIS Z8830:2013 using a specific surface area measurement apparatus (a Gemini 2375 Ver. 5.0 produced by Shimadzu Corporation) and carrying out measurements using a BET multipoint method.

### Materials Used for Forming Resin Layers in Examples and Comparative Examples

Materials used for forming resin layers in examples and comparative examples are shown in Tables 2 to 4 below. In addition, measured values for hydrophilization rate and BET specific surface area for the particle containing a metal oxide (metal oxide particle) are also shown. In addition, specific materials used in examples and comparative examples, and blending quantities thereof, are shown in Table 5 below. Moreover, blending quantities are given as parts by mass unless explicitly stated otherwise.

**[Table 2] <Resins>**

| Designation | Name |
|---|---|
| Polyester 1 | Poly(ethylene terephthalate) |
| | · Product name: TRN-8550FF, produced by Teijin Ltd. |
| Polyester 2 | Modified poly(ethylene terephthalate) |
| | (Condensation polymerization product of terephthalic acid, isophthalic acid and ethylene glycol) |
| | · Product name: IP121B, produced by Bell Polyester Products, Inc. |
| Polyester 3 | Poly(ethylene naphthalate) |
| | · Product name: TN-8065S, produced by Teijin Ltd. |
| Non-polyester 1 | Polyether ester amide |
| | · Product name: TPAE-H151, produced by T&K Toka |
| Non-polyester 2 | ABS (acrylonitrile-butadiene-styrene) |
| | · Product name: Toyolac 700-314, produced by Toray Industries, Inc. |

**[Table 3] <Ionic conducting agents>**

| Designation | Name | Structural formula |
|---|---|---|
| Ionic conducting agent 1 | 1-ethyl-3-methylimidazolium ethyl sulfate | 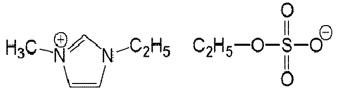 |
| | · Produced by Tokyo Kasei Kogyo Co., Ltd. | |
| Ionic conducting agent 2 | Tributylmethylammonium methyl sulfate | 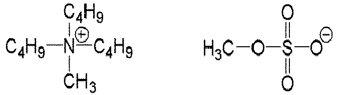 |
| | · Produced by Santa Cruz Biotechnology | |
| Ionic conducting agent 3 | 1-ethyl-3-methylimidazolium hydrogen sulfate | 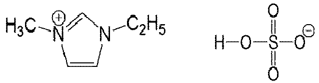 |
| | · Produced by Sigma Aldrich | |
| Ionic conducting agent 4 | 1-ethyl-3-methylimidazolium p-toluenesulfonate | 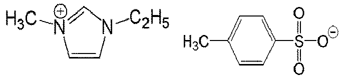 |
| | · Produced by Tokyo Kasei Kogyo Co., Ltd. | |
| Ionic conducting agent 5 | 1-butyl-3-methylimidazolium bromide | 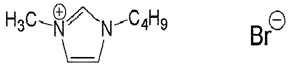 |
| | · Produced by Tokyo Kasei Kogyo Co., Ltd. | |
| Ionic conducting agent 6 | Trihexyltetradecylphosphonium bis(2,4,4-trimethylpentyl) phosphinate | 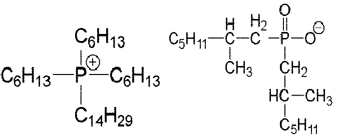 |
| | · Produced by Sigma Aldrich | |
| Ionic conducting agent 7 | Tributylethylammonium diethyl phosphate | 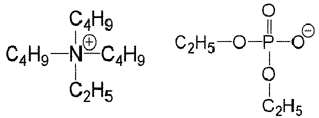 |
| | · Produced by Tokyo Kasei Kogyo Co., Ltd. | |
| Ionic conducting agent 8 | Trihexyltetradecylphosphonium decanoate | 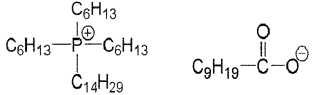 |
| | · Produced by Sigma Aldrich | |

**[Table 4] <Metal oxide particle>**

| Designation | Name |
|---|---|
| Metal oxide particle 1 | AEROSIL50 (Silica, produced by Nippon Aerosil Co. Ltd.) |
| | Hydrophilization rate:0.50 BET specific surface area:50 [m²/g] |
| Metal oxide particle 2 | AEROSIL90 (Silica, produced by Nippon Aerosil Co. Ltd.) |
| | Hydrophilization rate:0.52 BET specific surface area:90 [m²/g] |
| Metal oxide particle 3 | AEROSIL130 (Silica, produced by Nippon Aerosil Co. Ltd.) |
| | Hydrophilization rate:0.52 BET specific surface area:130 [m²/g] |
| Metal oxide particle 4 | AEROSIL200 (Silica, produced by Nippon Aerosil Co. Ltd.) |
| | Hydrophilization rate:0.96 BET specific surface area:200 [m²/g] |
| Metal oxide particle 5 | AEROSIL300 (Silica, produced by Nippon Aerosil Co. Ltd.) |
| | Hydrophilization rate:0.96 BET specific surface area:300 [m²/g] |
| Metal oxide particle 6 | AEROSIL380 (Silica, produced by Nippon Aerosil Co. Ltd.) |
| | Hydrophilization rate:0.98 BET specific surface area:380 [m²/g] |
| Metal oxide particle 7 | AEROXIDE Alu130 (Alumina, produced by Nippon Aerosil Co. Ltd.) |
| | Hydrophilization rate:0.67 BET specific surface area:130 [m²/g] |
| Metal oxide particle 8 | AEROXIDE TiO₂ P25 (Titanium oxide, produced by Nippon Aerosil Co. Ltd.) |
| | Hydrophilization rate:0.99 BET specific surface area:50 [m²/g] |
| Metal oxide particle 9 | AEROSIL R972 (Silica, produced by Nippon Aerosil Co. Ltd.) |
| | Hydrophilization rate:0.00 BET specific surface area: 110 [m²/g] |

### Example 1

At blending quantities shown in Table 5, materials shown in Table 5 were melted and mixed using a twin-screw kneading extruder (product name: PCM43, produced by Ikegai Corporation) to produce a resin composition.
- Extrusion rate: 6 kg/h
- Rotational speed of screw: 225 rpm
- Barrel control temperature: 270°C

The obtained resin composition was melt extruded under the conditions shown below using a single screw extrusion molding machine (produced by Research Laboratory of Plastics Technology Co., Ltd.) having a spiral cylindrical die (internal diameter: 195 mm, slit width: 1.1 mm) at the distal end thereof to produce a cylindrical film having the size shown below. The thus obtained cylindrical film was taken to be the electrophotographic belt of Example 1.
- Extrusion rate: 6 kg/h
- Die temperature: 290°C
- Size: external diameter 201 mm, thickness 70 µm

Evaluation results for this electrophotographic belt are shown in Table 6 below.

### Examples 2 to 22 and Comparative Examples 1 to 3

Electrophotographic belts of Examples 2 to 22 and Comparative Examples 1 to 3 were obtained in the same way as in Example 1, except that resin composition formulations were altered as shown in Table 5 below. Evaluation results for these belts are shown in Table 6 below.

Moreover, the electrophotographic belt produced in Comparative Example 2 could not be measured in terms of ρs at an applied voltage of 250 V, which exceeds the upper measurement limit, in an environment at a temperature of 23°C and a relative humidity of 50% or in an environment at a temperature of 15°C and a relative humidity of 10%, and measurements were therefore carried out by altering the applied voltage to 1000 V.

### Example 23

An electrophotographic belt shown in Example 23 was obtained in the same way as in Example 1, except that the resin composition formulation was altered as shown in Table 5 below, the barrel control temperature was changed to 240°C, and the die temperature was changed to 260°C. Evaluation results for this belt are shown in Table 6 below.

### Example 24

A resin composition was prepared by thermally melt kneading materials at the formulation shown in Table 5 below using a twin-screw extruder (product name: TEX30α, produced by Japan Steel Works, Ltd.). The thermal melt kneading temperature was adjusted so as to fall within the range from 260°C to 280°C, and the thermal melt kneading time was approximately 3 minutes.
The obtained resin composition was pelletized and then dried for 6 hours at a temperature of 140°C.

Next, a preform was produced by supplying these pellets to an injection molding apparatus having a reset cylinder temperature of 300°C (product name: SE180EV-A, produced by Sumitomo Heavy Industries, Ltd.). The injection molding die temperature was 30°C.

The preform was softened by being introduced into a heating apparatus at a temperature of 500°C, and heated at 500°C. Next, the preform was placed in a primary blow molding device. A blown bottle was then obtained by blow molding in a blowing mold using a stretching rod and air force (a blowing air injection part) at a preform temperature of 70°C, an air pressure of 0.3 MPa and a stretching rod speed of 1000 mm/s.

Next, the obtained blown bottle was set in a secondary blow molding apparatus, and a cylindrical nickel die was disposed so as to surround the outer periphery of the blown bottle. An air pressure of 0.1 MPa was then applied inside the bottle, the blown bottle was rotated around the inner surface of the die in such a way that air did not leak to the outside, and the cylindrical die was evenly heated for 60 seconds at 200°C using a heater while rotating the cylindrical die. Next, the cylindrical die was cooled to a normal temperature of 23°C using air, and the pressure applied to the inside of the bottle was released, thereby obtaining a heated blown bottle.

Both ends of the heated blown bottle were cut to obtain a single layer electrophotographic belt including only a resin layer. The obtained electrophotographic belt had a thickness of 70 µm and a circumference of 792.0 mm. Evaluation results for this electrophotographic belt are shown in Table 6 below.

**[Table 5]**

| | Polyester resin | | Non-polyester resin | | Ionic conducting agent | | Metal oxide particle | |
|---|---|---|---|---|---|---|---|---|
| | No. | Amount | No. | Amount | No. | Amount | No. | Amount |
| Example 1 | 1 | 90.0 | - | - | 1 | 5.0 | 1 | 5.0 |
| Example 2 | 1 | 90.0 | - | - | 1 | 5.0 | 2 | 5.0 |
| Example 3 | 1 | 90.0 | - | - | 1 | 5.0 | 3 | 5.0 |
| Example 4 | 1 | 90.0 | - | - | 1 | 5.0 | 4 | 5.0 |
| Example 5 | 1 | 90.0 | - | - | 1 | 5.0 | 5 | 5.0 |
| Example 6 | 1 | 90.0 | - | - | 1 | 5.0 | 6 | 5.0 |
| Example 7 | 1 | 90.0 | - | - | 1 | 5.0 | 7 | 5.0 |
| Example 8 | 1 | 90.0 | - | - | 1 | 5.0 | 8 | 5.0 |
| Example 9 | 1 | 90.0 | - | - | 2 | 5.0 | 3 | 5.0 |
| Example 10 | 1 | 90.0 | - | - | 3 | 5.0 | 3 | 5.0 |
| Example 11 | 1 | 90.0 | - | - | 4 | 5.0 | 3 | 5.0 |
| Example 12 | 1 | 90.0 | - | - | 5 | 5.0 | 3 | 5.0 |
| Example 13 | 1 | 90.0 | - | - | 6 | 5.0 | 3 | 5.0 |
| Example 14 | 1 | 90.0 | - | - | 7 | 5.0 | 3 | 5.0 |
| Example 15 | 1 | 90.0 | - | - | 8 | 5.0 | 3 | 5.0 |
| Example 16 | 1 | 75.0 | 1 | 15.0 | 8 | 5.0 | 3 | 5.0 |
| Example 17 | 1 | 97.5 | - | - | 1 | 0.5 | 3 | 2.0 |
| Example 18 | 1 | 88.0 | - | - | 1 | 10.0 | 3 | 2.0 |
| Example 19 | 1 | 92.5 | - | - | 1 | 5.0 | 3 | 2.5 |
| Example 20 | 1 | 92.5 | - | - | 1 | 2.5 | 3 | 5.0 |
| Example 21 | 2 | 90.0 | - | - | 1 | 5.0 | 3 | 5.0 |
| Example 22 | 2 | 75.0 | 1 | 15.0 | 1 | 5.0 | 3 | 5.0 |
| Example 23 | 3 | 90.0 | - | - | 1 | 5.0 | 3 | 5.0 |
| Example 24 | 3 | 75.0 | 1 | 15.0 | 1 | 5.0 | 3 | 5.0 |
| Comparative Example 1 | 1 | 95.0 | - | - | 1 | 5.0 | - | - |
| Comparative Example 2 | - | - | 2 | 95.0 | 1 | 5.0 | - | - |
| Comparative Example 3 | 1 | 90.0 | - | - | 1 | 5.0 | 9 | 5.0 |

**[Table 6]**

| | logρs | Environmental fluctuation (order of magnitude) |
|---|---|---|
| Example 1 | 9.6 | 2.3 |
| Example 2 | 9.3 | 2.1 |
| Example 3 | 8.9 | 2.2 |
| Example 4 | 8.6 | 2.3 |
| Example 5 | 9.0 | 2.3 |
| Example 6 | 9.0 | 2.6 |
| Example 7 | 9.7 | 2.0 |
| Example 8 | 9.4 | 2.4 |
| Example 9 | 10.9 | 2.2 |
| Example 10 | 9.0 | 2.5 |
| Example 11 | 9.9 | 2.7 |
| Example 12 | 12.2 | 2.9 |
| Example 13 | 11.7 | 1.9 |
| Example 14 | 11.7 | 2.7 |
| Example 15 | 11.2 | 1.8 |
| Example 16 | 10.4 | 1.9 |
| Example 17 | 11.1 | 2.0 |
| Example 18 | 9.1 | 2.4 |
| Example 19 | 9.4 | 2.4 |
| Example 20 | 9.6 | 2.1 |
| Example 21 | 8.9 | 2.2 |
| Example 22 | 8.1 | 2.3 |
| Example 23 | 8.9 | 2.2 |
| Example 24 | 8.9 | 1.9 |
| Comparative Example 1 | 12.3 | 3.3 |
| Comparative Example 2 | 14.2 | 2.5 |
| Comparative Example 3 | 12.3 | 3.2 |

In the table, environmental fluctuation (order of magnitude) indicates the value of (logps (30°C/80%)-logρs (15°C/10%)).

While the present disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.
An electrophotographic member, comprising a resin layer, the resin layer being electrically conductive, and the resin layer comprising: a thermoplastic polyester; a cation; an anion that does not contain a fluorine atom in a molecule of the anion; and a particle containing a metal oxide and having hydrophilization rate of 0.50 or more.

## Claims

1. An electrophotographic member comprising a resin layer,
the resin layer being electrically conductive, and
the resin layer comprising:
a thermoplastic polyester;
a cation,
an anion that does not contain a fluorine atom in a molecule of the anion, and
a particle containing a metal oxide and having a hydrophilization rate of 0.50 or more.

2. The electrophotographic member according to claim 1, wherein the particle containing a metal oxide is at least one selected from the group consisting of:
a silica particle having a surface whose hydrophilization rate is 0.50 or more, the hydrophilization rate being defined as a value calculated by dividing an absorbance at a wavelength of 7300 cm⁻¹ attributed to Si-OH by an absorbance at a wavelength of 4500 cm⁻¹ attributed to SiO₂ in an IR spectrum on a surface of the silica particle;
an alumina particle having a surface whose hydrophilization rate is 0.50 or more, the hydrophilization rate being defined as a value calculated by dividing an absorbance at a wavelength of 3690 cm⁻¹ attributed to Al-OH by an absorbance at a wavelength of 7425 cm⁻¹ attributed to Al₂O₃ in an IR spectrum on a surface the alumina particle; and
a titanium oxide particle having a surface whose hydrophilization rate is 0.50 or more, the hydrophilization rate being defined as a value calculated by dividing an absorbance at a wavelength of 7200 cm⁻¹ attributed to TI-OH by the absorbance at a wavelength of 4500 cm⁻¹ attributed to TiO₂ in an IR spectrum on a surface of the titanium oxide particle.

3. The electrophotographic member according to claim 1 or 2, wherein the particle containing a metal oxide has a hydrophilization rate of 0.50 to 1.00.

4. The electrophotographic member according to any one of claims 1 to 3, wherein the particle containing the metal oxide has a BET specific surface area of 50 to 380 m²/g.

5. The electrophotographic member according to any one of claims 1 to 4, wherein the anion is at least one selected from the group consisting of anions represented by formulae (1) to (3): 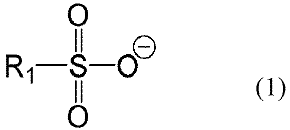 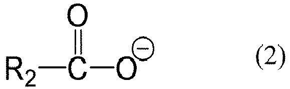 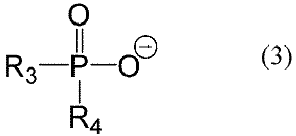 in formulae (1) to (3), R₁ to R₄ each independently denote a hydrogen atom, a hydrocarbon group having 1 to 18 carbon atoms or an alkoxy group having 1 to 18 carbon atoms.

6. The electrophotographic member according to any one of claims 1 to 5, wherein the cation is at least one selected from the group consisting of cations represented by formulae (4) to (6): 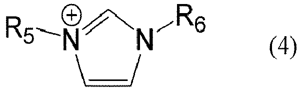 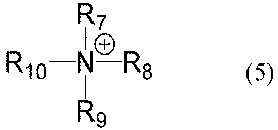 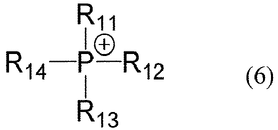 in formulae (4) to (6), R₅ to R₁₄ each independently denote a hydrogen atom or a hydrocarbon group having 1 to 14 carbon atoms.

7. The electrophotographic member according to any one of claims 1 to 6, wherein a combination of the anion and the cation is any one of following (i) to (v):
(i): a combination of an anion represented by formula (1) and a cation represented by formula (4),
(ii): a combination of an anion represented by formula (1) and a cation represented by formula (5),
(iii): a combination of an anion represented by formula (2) and a cation represented by formula (6),
(iv): a combination of an anion represented by formula (3) and a cation represented by formula (5),
(v): a combination of an anion represented by formula (3) and a cation represented by formula (6), 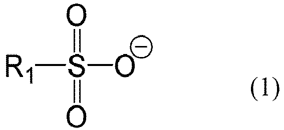 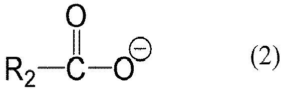 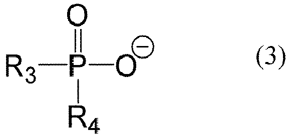 in formulae (1) to (3), R₁ to R₄ each independently denote a hydrogen atom, a hydrocarbon group having 1 to 18 carbon atoms or an alkoxy group having 1 to 18 carbon atoms, 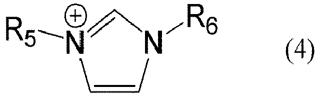 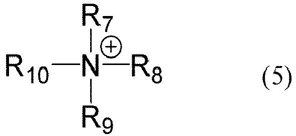 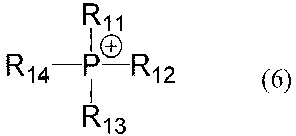 in formulae (4) to (6), R₅ to R₁₄ each independently denote a hydrogen atom or a hydrocarbon group having 1 to 14 carbon atoms.

8. The electrophotographic member according to any one of claims 1 to 7, wherein a sum of a content of the cation and the anion in the resin layer is 0.5 to 10.0 mass% relative to a mass of the resin layer.

9. The electrophotographic member according to any one of claims 1 to 8, wherein an amount of the particle containing the metal oxide in the resin layer is 20 to 400 parts by mass relative to a total of 100 parts by mass of the cation and the anion.

10. The electrophotographic member according to any one of claims 1 to 9, wherein a content of the thermoplastic polyester in the resin layer is 50.0 to 99.0 mass% relative to a mass of the resin layer.

11. The electrophotographic member according to any one of claims 1 to 10, wherein a surface resistivity ρs, as measured at the outer surface of the resin layer at a temperature of 23°C and a relative humidity of 50%, is 1.0×10⁶ to 1.0×10¹⁴ Ω/□.

12. The electrophotographic member according to any one of claims 1 to 11, wherein
the electrophotographic member is an electrophotographic belt having a form of an endless belt.

13. An electrophotographic image forming apparatus, wherein
the electrophotographic member according to any one of claims 1 to 12 is provided as an intermediate transfer member.

14. An electrically conductive resin composition comprising:
a thermoplastic polyester;
a cation;
an anion that does not contain a fluorine atom in a molecule of the anion; and
a particle containing a metal oxide and having hydrophilization rate of 0.50 or more.

15. The electrically conductive resin composition according to claim 14, wherein the particle containing a metal oxide is at least one selected from the group consisting of:
a silica particle having a surface whose hydrophilization rate is 0.50 or more, the hydrophilization rate being defined as a value calculated by dividing an absorbance at a wavelength of 7300 cm⁻¹ attributed to Si-OH by an absorbance at a wavelength of 4500 cm⁻¹ attributed to SiO₂ in an IR spectrum on a surface of the silica particle;
an alumina particle having a surface whose hydrophilization rate is 0.50 or more, the hydrophilization rate being defined as a value calculated by dividing an absorbance at a wavelength of 3690 cm⁻¹ attributed to Al-OH by an absorbance at a wavelength of 7425 cm⁻¹ attributed to Al₂O₃ in an IR spectrum on a surface the alumina particle; and
a titanium oxide particle having a surface whose hydrophilization rate is 0.50 or more, the hydrophilization rate being defined as a value calculated by dividing an absorbance at a wavelength of 7200 cm⁻¹ attributed to TI-OH by the absorbance at a wavelength of 4500 cm⁻¹ attributed to TiO₂ in an IR spectrum on a surface of the titanium oxide particle.

16. The electrically conductive resin composition according to claim 14 or 15, wherein the anion is at least one selected from the group consisting of anions represented by formulae (1) to (3), and the cation is at least one selected from the group consisting of cations represented by formulae (4) to (6): 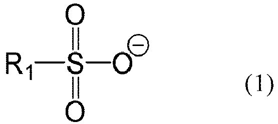 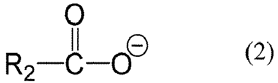 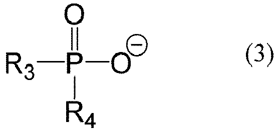 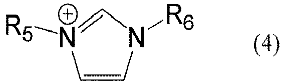 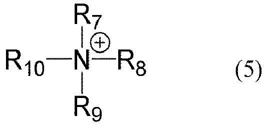 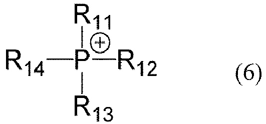 in formulae (1) to (3), R₁ to R₄ each independently denote a hydrogen atom, a hydrocarbon group having 1 to 18 carbon atoms or an alkoxy group having 1 to 18 carbon atoms, and in formulae (4) to (6), R₅ to R₁₄ each independently denote a hydrogen atom or a hydrocarbon group having 1 to 14 carbon atoms.
